(19) **Europäisches Patentamt / European Patent Office / Office européen des brevets**

(11) **EP 4 628 612 A1**

(12) # EUROPEAN PATENT APPLICATION
published in accordance with Art. 153(4) EPC

(43) Date of publication:
08.10.2025 Bulletin 2025/41

(21) Application number: 22967180.5

(22) Date of filing: 30.11.2022

(51) International Patent Classification (IPC):
C22C 38/00 (2006.01)    C21D 9/00 (2006.01)
C22C 38/32 (2006.01)    C22C 38/54 (2006.01)
H02K 49/02 (2006.01)    C21D 8/02 (2006.01)

(52) Cooperative Patent Classification (CPC):
C21D 9/00; C22C 38/00; C22C 38/32; C22C 38/54;
H02K 49/02; C21D 8/02

(86) International application number:
PCT/JP2022/044240

(87) International publication number:
WO 2024/116347 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: NIPPON STEEL CORPORATION
Chiyoda-ku
Tokyo 100-8071 (JP)

(72) Inventors:
• HAMAGUCHI, Tomoaki
  Tokyo 100-8071 (JP)

• NOGUCHI, Yasutaka
  Tokyo 100-8071 (JP)
• FUJITA, Takuya
  Tokyo 100-8071 (JP)
• KADOKAWA, Shotaro
  Tokyo 100-8071 (JP)
• NOGAMI, Hiroshi
  Tokyo 100-8071 (JP)
• IMANISHI, Kenji
  Tokyo 100-8071 (JP)

(74) Representative: Zimmermann & Partner
Patentanwälte mbB
P.O. Box 330 920
80069 München (DE)

(54) **EDDY-CURRENT-TYPE REDUCTION GEAR ROTOR AND METHOD FOR MANUFACTURING EDDY-CURRENT-TYPE REDUCTION GEAR ROTOR**

(57)     A rotor for an eddy current deceleration device that has high high-temperature strength and low electrical resistance, and a method for producing the rotor are provided. A rotor for an eddy current deceleration device according to the present disclosure includes a cylindrical part. The cylindrical part has: a chemical composition consisting of, by mass%, C: 0.05 to 0.15%, Si: 0.01 to 0.15%, Mn: 0.10 to 1.00%, P: 0.030% or less, S: 0.030% or less, Cr: 0.30 to 2.00%, Mo: 0.30 to 1.50%, V: 0.02 to 0.15%, Nb: 0.01 to 0.10%, sol. Al: 0.001 to 0.040%, B: 0.0005 to 0.0050%, N: 0.001 to 0.010%, and the balance: Fe and impurities, and satisfying Formula (1); a microstructure in which a total area fraction of martensite and bainite is 99% or more; and a yield stress of 120 to 250 MPa at 700°C.

$$Cr + 4Si + 3sol.\,Al + Mo \le 3.00 \quad (1)$$

FIG.1

Electrical Resistance ($m\Omega cm$) vs F1 ($=Cr+4Si+3sol.Al+Mo$)

**Description**

TECHNICAL FIELD

The present disclosure relates to a rotor and a method for producing a rotor, and more particularly to a rotor for an eddy current deceleration device for use in an eddy current deceleration device (retarder), and a method for producing the rotor.

BACKGROUND ART

Large-sized motor vehicles such as buses and trucks are equipped with braking devices such as foot brakes and exhaust brakes. Some large-sized motor vehicles that have emerged recently are also equipped with an eddy current deceleration device as a braking device. An eddy current deceleration device is also called a "retarder". For example, an eddy current deceleration device is actuated in a case where a large-sized motor vehicle is traveling on a downslope which has a long steep incline or the like and it is difficult to reduce the traveling speed of the large-sized motor vehicle even when the engine brake and the exhaust brake are used in combination. By actuating the eddy current deceleration device, the braking force can be further increased and the traveling speed of the large-sized motor vehicle can be effectively reduced.

The types of eddy current deceleration devices that are available include a type that uses electromagnets and a type that uses permanent magnets. An eddy current deceleration device that uses permanent magnets is equipped with a rotor, and a stator which is housed inside the rotor. The rotor is equipped with, for example, a cylindrical part (drum), an annular wheel part for fixing the rotor to a propeller shaft, and a plurality of arm parts which connect the cylindrical part and the wheel part. The stator is equipped with a cylindrical body, a plurality of permanent magnets of two kinds that have different polarities, and a plurality of pole pieces. The plurality of permanent magnets that have different polarities are alternately arranged in the circumferential direction on the outer peripheral surface of the cylindrical body. The pole pieces are arranged between the inner peripheral surface of the cylindrical part of the rotor and the permanent magnets. Among the components of the stator, the cylindrical body to which the plurality of permanent magnets are attached is capable of rotating around the axis of the cylindrical body separately and independently from the plurality of pole pieces.

During braking, that is, when the eddy current deceleration device is actuated, the magnetic flux of the permanent magnets of the stator reaches the rotor through the pole pieces, and a magnetic circuit is formed between the permanent magnets and the cylindrical part of the rotor. At this time, an eddy current is generated in the cylindrical part of the rotor. A Lorentz force is generated accompanying generation of the eddy current. The Lorentz force acts as a braking torque, and imparts a braking force to the large-sized motor vehicle. On the other hand, during non-braking operation, that is, in the case of deactivating the eddy current deceleration device, the relative position of the permanent magnets with respect to the pole pieces is shifted so that the magnetic flux of the permanent magnets does not reach the rotor. In this case, a magnetic circuit is not formed between the permanent magnets and the cylindrical part of the rotor. Therefore, an eddy current is not generated in the cylindrical part of the rotor, and a braking force is also not generated. By the above operations, the eddy current deceleration device switches between performing a braking operation and non-braking operation (deactivating).

In this connection, the braking force depends on the eddy current amount generated in the cylindrical part of the rotor during braking. Specifically, the braking force increases as the eddy current amount generated in the cylindrical part of the rotor is larger during braking. In other words, in order to increase the eddy current amount generated during braking and thus increase the braking force, it is preferable that the electrical resistance of the cylindrical part of the rotor is lower.

In addition, during braking, the rotor is heated by Joule heating that occurs together with the eddy current. On the other hand, during non-braking operation of the eddy current deceleration device, the rotor is rapidly cooled (air-cooled) by a plurality of cooling fins formed on the outer peripheral surface of the cylindrical part. In other words, by repetition of braking and non-braking, a heat cycle is applied to the rotor. Therefore, a rotor for an eddy current deceleration device is required to have not only low electrical resistance, but also high high-temperature strength.

Japanese Patent Application Publication No. 8-49041 (Patent Literature 1) discloses a technique for obtaining high high-temperature strength in a rotor for an eddy current deceleration device while reducing the electrical resistance.

A rotor material for an eddy current deceleration device disclosed in Patent Literature 1 consists of, by mass%, C: 0.05 to 0.15%, Si: 0.10 to 0.40%, Mn: 0.5 to 1.0%, P: 0.05% or less, Ni: 0.50% or less, Mo: 0.2 to 1.0%, Nb: 0.01 to 0.03%, V: 0.03 to 0.07%, B: 0.0005 to 0.003%, sol. Al: 0.02 to 0.09%, and N: 0.01% or less, with the balance being substantially Fe. According to Patent Literature 1, the electrical resistance of the rotor material is reduced by reducing the contents of P, Ni, and Mn that are elements which increase electrical resistance. In addition, the high-temperature strength of the rotor material is increased by containing B.

CITATION LIST

# EP 4 628 612 A1

[Patent Literature]

[Patent Literature 1] Japanese Patent Application Publication No. 8-49041

## SUMMARY OF INVENTION

### TECHNICAL PROBLEM

As described above, in the aforementioned Patent Literature 1, a rotor for an eddy current deceleration device is provided in which high-temperature strength is increased while reducing electrical resistance. However, an eddy current deceleration device in which high-temperature strength is increased while reducing electrical resistance may also be obtained by a technique that is different from the technique disclosed in the aforementioned Patent Literature 1.

An objective of the present disclosure is to provide a rotor for an eddy current deceleration device that has high high-temperature strength and low electrical resistance, and a method for producing the rotor for an eddy current deceleration device.

### SOLUTION TO PROBLEM

A rotor for an eddy current deceleration device according to the present disclosure includes:

a cylindrical part,
wherein the cylindrical part has:

a chemical composition that consists of, by mass%,
C: 0.05 to 0.15%,
Si: 0.01 to 0.15%,
Mn: 0.10 to 1.00%,
P: 0.030% or less,
S: 0.030% or less,
Cr: 0.30 to 2.00%,
Mo: 0.30 to 1.50%,
V: 0.02 to 0.15%,
Nb: 0.01 to 0.10%,
sol. Al: 0.001 to 0.040%,
B: 0.0005 to 0.0050%, and
N: 0.001 to 0.010%,
with the balance being Fe and impurities,
and satisfies Formula (1);
a microstructure in which a total area fraction of martensite and bainite is 99% or more; and
a yield stress of 120 to 250 MPa at 700°C;

$$Cr + 4Si + 3sol.\ Al + Mo \leq 3.00 \qquad (1)$$

where, a content in percent by mass of a corresponding element is substituted for each symbol of an element in Formula (1).

A rotor for an eddy current deceleration device according to the present disclosure includes:

a cylindrical part,
wherein the cylindrical part has:

a chemical composition that contains, by mass%,
C: 0.05 to 0.15%,
Si: 0.01 to 0.15%,
Mn: 0.10 to 1.00%,
P: 0.030% or less,
S: 0.030% or less,
Cr: 0.30 to 2.00%,

3

Mo: 0.30 to 1.50%,
V: 0.02 to 0.15%,
Nb: 0.01 to 0.10%,
sol. Al: 0.001 to 0.040%,
B: 0.0005 to 0.0050%, and
N: 0.001 to 0.010%,
and further contains one or more elements selected from a group consisting of:

Cu: 0.20% or less,
Ni: 0.20% or less, and
Ti: 0.050% or less,
with the balance being Fe and impurities,
and satisfies Formula (1);
a microstructure in which a total area fraction of martensite and bainite is 99% or more; and
a yield stress of 120 to 250 MPa at 700°C;

$$Cr + 4Si + 3sol.\ Al + Mo \le 3.00 \quad (1)$$

where, a content in percent by mass of a corresponding element is substituted for each symbol of an element in Formula (1).

A method for producing a rotor for an eddy current deceleration device according to the present disclosure includes:

a preparation process of preparing an intermediate product having a chemical composition that consists of, by mass%,
C: 0.05 to 0.15%,
Si: 0.01 to 0.15%,
Mn: 0.10 to 1.00%,
P: 0.030% or less,
S: 0.030% or less,
Cr: 0.30 to 2.00%,
Mo: 0.30 to 1.50%,
V: 0.02 to 0.15%,
Nb: 0.01 to 0.10%,
sol. Al: 0.001 to 0.040%,
B: 0.0005 to 0.0050%, and
N: 0.001 to 0.010%,
with the balance being Fe and impurities,
and satisfies Formula (1);
a quenching process of subjecting the intermediate product to quenching;
a tempering process of subjecting the intermediate product after the quenching process to tempering in which the intermediate product is held at a temperature of 700°C to less than an $A_{c1}$ point;
a working process of subjecting the intermediate product after the tempering process to working to form a cylindrical part; and
a rotor forming process of producing a rotor for an eddy current deceleration device using the cylindrical part;

$$Cr + 4Si + 3sol.\ Al + Mo \le 3.00 \quad (1)$$

where, a content in percent by mass of a corresponding element is substituted for each symbol of an element in Formula (1).

A method for producing a rotor for an eddy current deceleration device according to the present disclosure includes:

a preparation process of preparing an intermediate product having a chemical composition that contains, by mass%,
C: 0.05 to 0.15%,

Si: 0.01 to 0.15%,
Mn: 0.10 to 1.00%,
P: 0.030% or less,
S: 0.030% or less,
Cr: 0.30 to 2.00%,
Mo: 0.30 to 1.50%,
V: 0.02 to 0.15%,
Nb: 0.01 to 0.10%,
sol. Al: 0.001 to 0.040%,
B: 0.0005 to 0.0050%, and
N: 0.001 to 0.010%,
and further contains one or more elements selected from a group consisting of:

Cu: 0.20% or less,
Ni: 0.20% or less, and
Ti: 0.050% or less,
with the balance being Fe and impurities,
and satisfies Formula (1);
a quenching process of subjecting the intermediate product to quenching;
a tempering process of subjecting the intermediate product after the quenching process to tempering in which the intermediate product is held at a temperature of 700°C to less than an $A_{c1}$ point;
a working process of subjecting the intermediate product after the tempering process to working to form a cylindrical part; and
a rotor forming process of producing a rotor for an eddy current deceleration device using the cylindrical part;

$$Cr + 4Si + 3sol.\ Al + Mo \leq 3.00 \qquad (1)$$

where, a content in percent by mass of a corresponding element is substituted for each symbol of an element in Formula (1).

ADVANTAGEOUS EFFECTS OF INVENTION

The rotor for an eddy current deceleration device according to the present disclosure has high high-temperature strength and low electrical resistance. The method for producing a rotor for an eddy current deceleration device according to the present disclosure can produce the aforementioned rotor for an eddy current deceleration device.

BRIEF DESCRIPTION OF DRAWINGS

[FIG. 1] FIG. 1 is a view illustrating the relation between F1 (= Cr + 4Si + 3sol. Al + Mo) and electrical resistance ($\mu\Omega$cm) in the present Examples.
[FIG. 2] FIG. 2 is a front view of an eddy current deceleration device to which a rotor for an eddy current deceleration device of the present embodiment is applied.
[FIG. 3] FIG. 3 is a cross-sectional view in an axial direction of a propeller shaft of the eddy current deceleration device in a case where the eddy current deceleration device illustrated in FIG. 2 is fixed to the propeller shaft.
[FIG. 4] FIG. 4 is a cross-sectional view perpendicular to the axial direction (cross-sectional view in a radial direction) of the eddy current deceleration device during non-braking operation.
[FIG. 5] FIG. 5 is a cross-sectional view perpendicular to the axial direction (cross-sectional view in the radial direction) of the eddy current deceleration device during braking.

DESCRIPTION OF EMBODIMENT

The present inventors conducted investigations and studies regarding a technique for achieving both high high-temperature strength and low electrical resistance in a rotor for an eddy current deceleration device. As a result, the present inventors obtained the following findings.
First, the present inventors focused on the chemical composition of the cylindrical part of a rotor for an eddy current deceleration device, and investigated various means for increasing the high-temperature strength of the rotor. As a result, the present inventors have found that the high-temperature strength of the rotor can be increased by increasing the content of Cr in the chemical composition of the cylindrical part of the rotor.

Specifically, as high-temperature strength of a rotor for an eddy current deceleration device, the present inventors focused on the yield stress at 700°C. The present inventors also conducted studies from the viewpoint of the chemical composition with regarding to a rotor for an eddy current deceleration device having a yield stress at 700°C that satisfies a condition of being within the range of 120 to 250 MPa. As a result of detailed studies by the present inventors, it has been revealed that if the cylindrical part of a rotor for an eddy current deceleration device has a chemical composition containing by mass%, C: 0.05 to 0.15%, Si: 0.01 to 0.15%, Mn: 0.10 to 1.00%, P: 0.030% or less, S: 0.030% or less, Cr: 0.30 to 2.00%, Mo: 0.30 to 1.50%, V: 0.02 to 0.15%, Nb: 0.01 to 0.10%, sol. Al: 0.001 to 0.040%, B: 0.0005 to 0.0050%, and N: 0.001 to 0.010%, and also selectively containing one or more elements selected from a group consisting of Cu: 0.20% or less, Ni: 0.20% or less, and Ti: 0.050% or less, with the balance being Fe and impurities, there is a possibility that a rotor for an eddy current deceleration device having a yield stress at 700°C that satisfies a condition of being within the range of 120 to 250 MPa can be obtained.

On the other hand, there is a concern that if the content of alloying elements in the chemical composition of the cylindrical part of a rotor for an eddy current deceleration device is increased, the electrical resistance of the rotor will increase. An effect of increasing the electrical resistance of the rotor differs depending on the element, and even among the elements in the aforementioned chemical composition, the effect that Cr has on increasing the electrical resistance is high. Therefore, in the chemical composition of a cylindrical part of conventional rotors for an eddy current deceleration device, the high-temperature strength has been increased while reducing the content of Cr as much as possible.

However, in a rotor for an eddy current deceleration device according to the present embodiment, the high-temperature strength of the rotor is increased by purposely increasing the content of Cr to within the aforementioned range in the chemical composition of the cylindrical part. In other words, in a rotor for an eddy current deceleration device that includes a cylindrical part having the chemical composition described above in which the content of Cr has been increased, the electrical resistance is liable to become high. Therefore the present inventors conducted detailed studies regarding a method for reducing electrical resistance even in a rotor for an eddy current deceleration device including a cylindrical part having the chemical composition described above. As a result, the present inventors have discovered that when a cylindrical part has the chemical composition described above, if the following Formula (1) is also satisfied, there is a possibility that electrical resistance can be reduced while maintaining a yield stress at 700°C of 120 to 250 MPa:

$$Cr + 4Si + 3sol. \, Al + Mo \leq 3.00 \quad (1)$$

where, a content in percent by mass of a corresponding element is substituted for each symbol of an element in Formula (1).

Let F1 be defined as $F1 = Cr + 4Si + 3sol. \, Al + Mo$. F1 is an index that indicates the level of electrical resistance in a rotor for an eddy current deceleration device that includes a cylindrical part having the chemical composition described above. If F1 is 3.00 or less, the electrical resistance can be reduced even in a case where the content of Cr is increased to within the range of 0.30 to 2.00%. This point will now described specifically using the drawings.

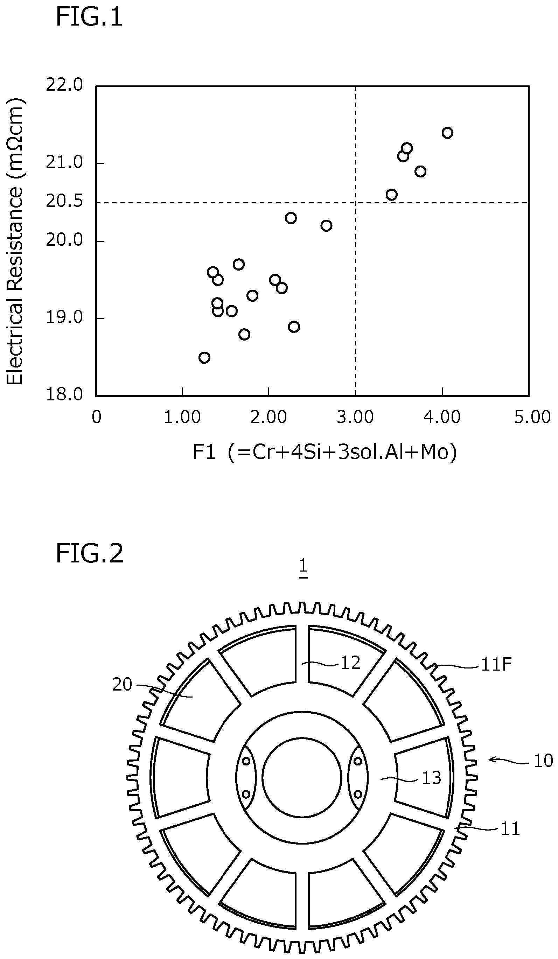

FIG. 1 is a view illustrating the relation between F1 ($= Cr + 4Si + 3sol. \, Al + Mo$) and electrical resistance ($\mu\Omega$cm) in the present Examples. FIG. 1 was created using F1 and the results of an electrical resistance test for each steel material in a case where, among Examples to be described later, respective steel materials that each had the chemical composition described above, a microstructure in which a total area fraction of martensite and bainite was 99% or more, and a yield stress of 120 to 250 MPa at 700°C, were regarded as rotors for an eddy current deceleration device. Referring to FIG. 1, in the relation between F1 and electrical resistance, it can be seen that if F1 is 3.00 or less, the electrical resistance of a steel material regarded as a rotor for an eddy current deceleration device can be stably reduced to 20.5 $\mu\Omega$cm or less.

Accordingly, with respect to the rotor for an eddy current deceleration device according to the present embodiment, in the chemical composition of the cylindrical part, in addition to being the chemical composition described above, F1 is made 3.00 or less. As a result, the rotor for an eddy current deceleration device according to the present embodiment can achieve both high high-temperature strength and low electrical resistance.

The gist of the rotor for an eddy current deceleration device and the method for producing the rotor for an eddy current deceleration device according to the present embodiment, which were completed based on the above findings, is as follows.

[1] A rotor for an eddy current deceleration device, including:

a cylindrical part,
wherein the cylindrical part has:

a chemical composition that consists of, by mass%,
C: 0.05 to 0.15%,
Si: 0.01 to 0.15%,
Mn: 0.10 to 1.00%,
P: 0.030% or less,
S: 0.030% or less,
Cr: 0.30 to 2.00%,
Mo: 0.30 to 1.50%,
V: 0.02 to 0.15%,
Nb: 0.01 to 0.10%,
sol. Al: 0.001 to 0.040%,
B: 0.0005 to 0.0050%, and
N: 0.001 to 0.010%,
with the balance being Fe and impurities,
and satisfies Formula (1);
a microstructure in which a total area fraction of martensite and bainite is 99% or more; and
a yield stress of 120 to 250 MPa at 700°C ;

$$Cr + 4Si + 3sol.\ Al + Mo \leq 3.00 \quad (1)$$

where, a content in percent by mass of a corresponding element is substituted for each symbol of an element in Formula (1).

[2] A rotor for an eddy current deceleration device, including:

a cylindrical part,
wherein the cylindrical part has:

a chemical composition that contains, by mass%,
C: 0.05 to 0.15%,
Si: 0.01 to 0.15%,
Mn: 0.10 to 1.00%,
P: 0.030% or less,
S: 0.030% or less,
Cr: 0.30 to 2.00%,
Mo: 0.30 to 1.50%,
V: 0.02 to 0.15%,
Nb: 0.01 to 0.10%,
sol. Al: 0.001 to 0.040%,
B: 0.0005 to 0.0050%, and
N: 0.001 to 0.010%,
and further contains one or more elements selected from a group consisting of:

Cu: 0.20% or less,
Ni: 0.20% or less, and
Ti: 0.050% or less,
with the balance being Fe and impurities,
and satisfies Formula (1);
a microstructure in which a total area fraction of martensite and bainite is 99% or more; and
a yield stress of 120 to 250 MPa at 700°C;

$$Cr + 4Si + 3sol.\ Al + Mo \leq 3.00 \quad (1)$$

where, a content in percent by mass of a corresponding element is substituted for each symbol of an element in Formula (1).

[3] A method for producing the rotor for an eddy current deceleration device according to [1], including:

a preparation process of preparing an intermediate product having a chemical composition that consists of, by mass%,

C: 0.05 to 0.15%,
Si: 0.01 to 0.15%,
Mn: 0.10 to 1.00%,
P: 0.030% or less,
S: 0.030% or less,
Cr: 0.30 to 2.00%,
Mo: 0.30 to 1.50%,
V: 0.02 to 0.15%,
Nb: 0.01 to 0.10%,
sol. Al: 0.001 to 0.040%,
B: 0.0005 to 0.0050%, and
N: 0.001 to 0.010%,

with the balance being Fe and impurities,
and satisfies Formula (1);
a quenching process of subjecting the intermediate product to quenching;
a tempering process of subjecting the intermediate product after the quenching process to tempering in which the intermediate product is held at a temperature of 700°C to less than an $A_{c1}$ point;
a working process of subjecting the intermediate product after the tempering process to working to form a cylindrical part; and
a rotor forming process of producing a rotor for an eddy current deceleration device using the cylindrical part;

$$Cr + 4Si + 3sol. Al + Mo \leq 3.00 \qquad (1)$$

where, a content in percent by mass of a corresponding element is substituted for each symbol of an element in Formula (1).

[4] A method for producing the rotor for an eddy current deceleration device according to [2], including:

a preparation process of preparing an intermediate product having a chemical composition that contains, by mass%,

C: 0.05 to 0.15%,
Si: 0.01 to 0.15%,
Mn: 0.10 to 1.00%,
P: 0.030% or less,
S: 0.030% or less,
Cr: 0.30 to 2.00%,
Mo: 0.30 to 1.50%,
V: 0.02 to 0.15%,
Nb: 0.01 to 0.10%,
sol. Al: 0.001 to 0.040%,
B: 0.0005 to 0.0050%, and
N: 0.001 to 0.010%,

and further contains one or more elements selected from a group consisting of:

Cu: 0.20% or less,
Ni: 0.20% or less, and
Ti: 0.050% or less,
with the balance being Fe and impurities,
and satisfies Formula (1);
a quenching process of subjecting the intermediate product to quenching;
a tempering process of subjecting the intermediate product after the quenching process to tempering in which the intermediate product is held at a temperature of 700°C to less than an $A_{c1}$ point;
a working process of subjecting the intermediate product after the tempering process to working to form a cylindrical part; and
a rotor forming process of producing a rotor for an eddy current deceleration device using the cylindrical part;

$$Cr + 4Si + 3sol. \, Al + Mo \leq 3.00 \qquad (1)$$

where, a content in percent by mass of a corresponding element is substituted for each symbol of an element in Formula (1).

In addition, the gist of the rotor for an eddy current deceleration device and the method for producing the rotor for an eddy current deceleration device according to the present embodiment can also be described as follows.

[1] A rotor for an eddy current deceleration device, including:

a cylindrical part,
wherein the cylindrical part has:

a chemical composition that consists of, by mass%,
C: 0.05 to 0.15%,
Si: 0.01 to 0.15%,
Mn: 0.10 to 1.00%,
P: 0.030% or less,
S: 0.030% or less,
Cr: 0.30 to 2.00%,
Mo: 0.30 to 1.50%,
V: 0.02 to 0.15%,
Nb: 0.01 to 0.10%,
sol. Al: 0.001 to 0.040%,
B: 0.0005 to 0.0050%,
N: 0.001 to 0.010%,
Cu: 0 to 0.20%,
Ni: 0 to 0.20%,
Ti: 0 to 0.050%, and
the balance: Fe and impurities,
and satisfies Formula (1);
a microstructure in which a total area fraction of martensite and bainite is 99% or more; and
a yield stress of 120 to 250 MPa at 700°C;

$$Cr + 4Si + 3sol. \, Al + Mo \leq 3.00 \qquad (1)$$

where, a content in percent by mass of a corresponding element is substituted for each symbol of an element in Formula (1).

[2] The rotor for an eddy current deceleration device according to [1], wherein the chemical composition contains one or more elements selected from a group consisting of:

Cu: 0.01 to 0.20%,
Ni: 0.01 to 0.20%, and
Ti: 0.001 to 0.050%.

[3] A method for producing the rotor for an eddy current deceleration device according to [1] or [2], including:

a preparation process of preparing an intermediate product having a chemical composition that consists of, by mass%,
C: 0.05 to 0.15%,
Si: 0.01 to 0.15%,
Mn: 0.10 to 1.00%,
P: 0.030% or less,
S: 0.030% or less,
Cr: 0.30 to 2.00%,

Mo: 0.30 to 1.50%,
V: 0.02 to 0.15%,
Nb: 0.01 to 0.10%,
sol. Al: 0.001 to 0.040%,
B: 0.0005 to 0.0050%,
N: 0.001 to 0.010%,
Cu: 0 to 0.20%,
Ni: 0 to 0.20%,
Ti: 0 to 0.050%, and
the balance: Fe and impurities,
and satisfies Formula (1);
a quenching process of subjecting the intermediate product to quenching;
a tempering process of subjecting the intermediate product after the quenching process to tempering in which the intermediate product is held at a temperature of 700°C to less than an $A_{c1}$ point;
a working process of subjecting the intermediate product after the tempering process to working to form a cylindrical part; and
a rotor forming process of producing a rotor for an eddy current deceleration device using the cylindrical part;

$$Cr + 4Si + 3sol.\ Al + Mo \leq 3.00 \qquad (1)$$

where, a content in percent by mass of a corresponding element is substituted for each symbol of an element in Formula (1).

[4] The method for producing a rotor for an eddy current deceleration device according to [3], wherein the chemical composition contains one or more elements selected from a group consisting of:

Cu: 0.01 to 0.20%,
Ni: 0.01 to 0.20%, and
Ti: 0.001 to 0.050%.

Hereunder, the rotor for an eddy current deceleration device of the present embodiment is described in detail.

[Structure of eddy current deceleration device]

FIG. 2 is a front view of an eddy current deceleration device 1 to which the rotor for an eddy current deceleration device of the present embodiment is applied. Referring to FIG. 2, an eddy current deceleration device 1 includes a rotor 10 and a stator 20.

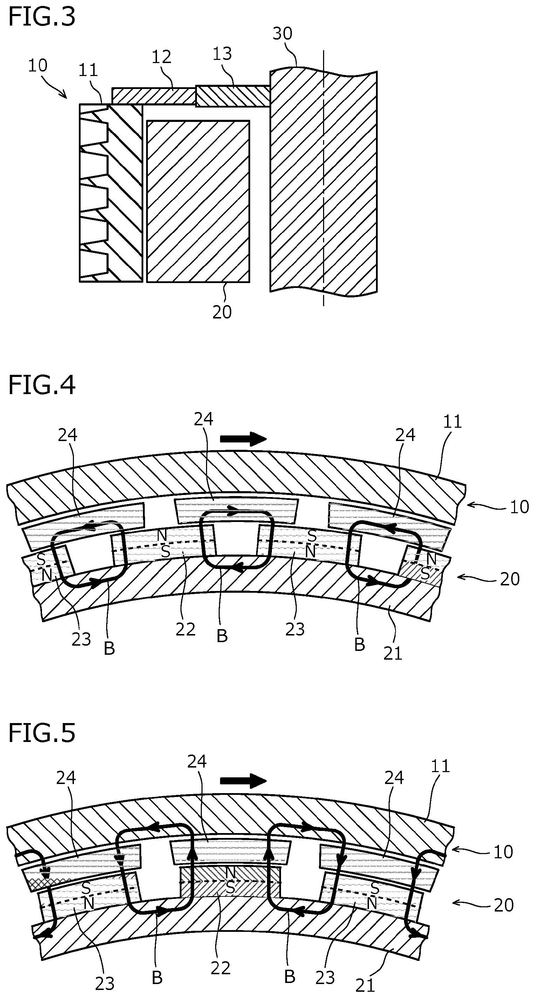

FIG. 3 is a cross-sectional view of the eddy current deceleration device 1 illustrated in FIG. 2 in an axial direction of a propeller shaft 30, in a case where the eddy current deceleration device 1 is fixed to the propeller shaft 30. Referring to FIG. 3, in the present embodiment, the rotor 10 is fixed to the propeller shaft 30. The stator 20 is fixed to an unshown transmission. Referring to FIG. 2 and FIG. 3, the rotor 10 includes a cylindrical part (drum) 11. More specifically, the rotor 10 includes the cylindrical part 11, an arm part 12, and a wheel part 13. The cylindrical part 11 is a cylindrical shape, and has an inner diameter that is greater than the outer diameter of the stator 20. The wheel part 13 is an annular member that has an outer diameter which is smaller than the inner diameter of the cylindrical part 11, and has a through-hole at the center section thereof. A thickness (length in the axial direction of the propeller shaft 30) of the wheel part 13 is thinner than a thickness (length in the axial direction of the propeller shaft 30) of the cylindrical part 11. The wheel part 13 is fixed to the propeller shaft 30 by inserting the propeller shaft 30 into the through-hole. As illustrated in FIG. 2 and FIG. 3, the arm part 12 connects an end portion of the cylindrical part 11 and the wheel part 13. Note that, a plurality of cooling fins 11F are formed on the outer peripheral surface of the cylindrical part 11. The cylindrical part 11, the arm part 12, and the wheel part 13 may be integrally formed. The cylindrical part 11, the arm part 12, and the wheel part 13 may composed of separate and independent members.

FIG. 4 is a cross-sectional view perpendicular to the axial direction (cross-sectional view in a radial direction) of the eddy current deceleration device 1 at a time of non-braking operation. Referring to FIG. 4, the stator 20 includes a magnet holding ring 21, a plurality of permanent magnets 22 and 23, and a plurality of pole pieces 24. The plurality of permanent magnets 22 and permanent magnets 23 are alternately arranged in a circumferential direction on the outer peripheral surface of the magnet holding ring 21. Of the entire surface of the permanent magnet 22, a surface that faces the inner peripheral surface of the cylindrical part 11 of the rotor 10 is the N pole. Of the entire surface of the permanent magnet 22, a surface that faces the outer peripheral surface of the magnet holding ring 21 is the S pole. Of the entire surface of the permanent magnet 23, a surface that faces the inner peripheral surface of the cylindrical part 11 of the rotor 10 is the S pole. Of the entire surface of the permanent magnet 23, a surface that faces the outer peripheral surface of the magnet holding ring 21 is the N pole. The plurality of pole pieces 24 are disposed above the plurality of permanent magnets 22 and 23, and are arranged in a circumferential direction of the stator 20. The plurality of pole pieces 24 are arranged between the plurality of permanent magnets 22 and 23 and the inner peripheral surface of the cylindrical part 11.

[Regarding braking and non-braking operation of eddy current deceleration device 1]

Referring to FIG. 4, at a time of non-braking operation, when viewed in the radial direction of the eddy current deceleration device 1, each of the permanent magnets 22 and each of the permanent magnets 23 is arranged so as to overlap with two of the pole pieces 24 that are adjacent to each other. In other words, when viewed in the radial direction of the eddy current deceleration device 1, one pole piece 24 is arranged so as to straddle permanent magnets 22 and 23 that are adjacent to each other. In this case, as illustrated in FIG. 4, a magnetic flux B flows through the inside of the stator 20. Specifically, the magnetic flux B flows among the permanent magnets 22 and 23, the pole piece 24, and the magnet holding ring 21. Therefore, a magnetic circuit is not formed between the rotor 10 and the permanent magnets 22 and 23, and a Lorentz force is not generated in the rotor 10. Consequently, in the state illustrated in FIG. 4, a braking force does not act.
FIG. 5 is a cross-sectional view perpendicular to the axial direction (cross-sectional view in the radial direction) of the eddy current deceleration device 1 at the time of a braking operation. At the time of a braking operation, the magnet holding ring 21 in the stator 20 rotates to shift the relative positions of the permanent magnets 22 and 23 with respect to the pole pieces 24 in comparison to the state illustrated in FIG. 4. Specifically, in FIG. 5, at a time of a braking operation, when viewed in the radial direction of the eddy current deceleration device 1, each permanent magnet 22 or 23 is arranged directly below a pole piece 24. That is, each of the permanent magnets 22 and 23 is arranged so as to overlap with only one pole piece 24. In this case, as illustrated in FIG. 5, the magnetic flux B flows among the magnet holding ring 21, the permanent magnet 22 or 23, the pole piece 24, and the cylindrical part 11. Therefore, a magnetic circuit is formed between the rotor 10 and the permanent magnet 22 or 23. At this time, an eddy current is generated in the cylindrical part 11 of the rotor 10. A Lorentz force is generated accompanying generation of the eddy current. The Lorentz force acts as a braking torque, and a braking force arises.
As described above, the eddy current deceleration device 1 generates a braking force by means of an eddy current that is generated in the rotor 10. Therefore, it is preferable that the amount of eddy current generated in the cylindrical part 11 of the rotor 10 is large. This is because the braking force will be large. The smaller the electrical resistance of the cylindrical part 11 is, the greater the generated amount of eddy current will be. Therefore, it is preferable that the electrical resistance is small in the cylindrical part 11 of the rotor 10. The rotor 10 is also subjected to a heat cycle by repetition of braking and non-braking. As mentioned above, recently there has been a demand to obtain not only low electrical resistance, but also high high-temperature strength. The rotor 10 is described in detail hereunder.

[Regarding rotor 10 for an eddy current deceleration device]

[Chemical composition]

The chemical composition of the cylindrical part 11 of the rotor 10 for an eddy current deceleration device of the present embodiment contains the following elements. The symbol "%" in relation to an element means "mass%" unless specifically stated otherwise.

[Regarding essential elements]

C: 0.05 to 0.15%

Carbon (C) increases the hardenability of the steel material that constitutes the rotor, and increases the strength of the steel material. In addition, C forms fine carbides such as V carbides and medium-sized carbides such as cementite, and thereby increases the high-temperature strength of the steel material. If the content of C is less than 0.05%, even when the contents of the other elements are within the ranges of the present embodiment, the aforementioned effects will not be sufficiently obtained. On the other hand, if the content of C is more than 0.15%, even when the contents of the other elements are within the ranges of the present embodiment, the electrical resistance of the steel material will excessively increase. If the electrical resistance of the steel material increases, during braking of the eddy current deceleration device 1, the eddy current amount flowing through the cylindrical part 11 of the rotor 10 will decrease. As a result, the braking force of the eddy current deceleration device 1 will decrease. Furthermore, if the content of C is more than 0.15%, even when the contents of the other elements are within the ranges of the present embodiment, the toughness of the steel material may decrease. Therefore, the content of C is within the range of 0.05 to 0.15%. A preferable lower limit of the content of C is 0.06%, more preferably is 0.07%, and further preferably is 0.08%. A preferable upper limit of the content of C is 0.14%, more preferably is 0.13%, and further preferably is 0.12%.

Si: 0.01 to 0.15%

Silicon (Si) deoxidizes the steel in a steel making process. In addition, Si increases the hardenability of the steel material, and increases the strength of the steel material. If the content of Si is less than 0.01%, even when the contents of the other elements are within the ranges of the present embodiment, the aforementioned effects will not be sufficiently obtained. On the other hand, if the content of Si is more than 0.15%, even when the contents of the other elements are within the ranges of the present embodiment, the electrical resistance of the steel material will excessively increase. If the electrical resistance of the steel material increases, during braking of the eddy current deceleration device 1, the eddy current amount flowing through the cylindrical part 11 of the rotor 10 will decrease. As a result, the braking force of the eddy current deceleration device 1 will decrease. Therefore, the content of Si is within the range of 0.01 to 0.15%. A preferable lower limit of the content of Si is more than 0.01%, more preferably is 0.02%, and further preferably is 0.03%. A preferable upper limit of the content of Si is 0.12%, more preferably is 0.10%, and further preferably is less than 0.10%.

Mn: 0.10 to 1.00%

Manganese (Mn) deoxidizes the steel in the steel making process. In addition, Mn increases the hardenability of the steel material, and increases the strength of the steel material. If the content of Mn is less than 0.10%, even when the contents of the other elements are within the ranges of the present embodiment, the aforementioned effects will not be sufficiently obtained. On the other hand, if the content of Mn is more than 1.00%, even when the contents of the other elements are within the ranges of the present embodiment, the electrical resistance of the steel material will excessively increase. If the electrical resistance of the steel material increases, at a time of braking of the eddy current deceleration device 1, the eddy current amount flowing through the cylindrical part 11 of the rotor 10 will decrease. As a result, the braking force of the eddy current deceleration device 1 will decrease. If the content of Mn is more than 1.00%, furthermore, even when the contents of the other elements are within the ranges of the present embodiment, the austenite phase will become stable and the $A_{c1}$ transformation point will decrease, and in some cases it will not be possible to make the tempering temperature 700°C or more. Therefore, the content of Mn is within the range of 0.10 to 1.00%. A preferable lower limit of the content of Mn is 0.15%, more preferably is 0.20%, further preferably is 0.25%, and further preferably is 0.30%. A preferable upper limit of the content of Mn is 0.95%, more preferably is 0.90%, further preferably is 0.85%, and further preferably is 0.80%.

P: 0.030% or less

Phosphorus (P) is an impurity that is unavoidably contained. In other words, the content of P is more than 0%. P reduces the hot workability and toughness of the steel material. P also increases the electrical resistance of the steel material. If the electrical resistance of the steel material increases, at a time of braking of the eddy current deceleration device 1, the eddy current amount flowing through the cylindrical part 11 of the rotor 10 will decrease. As a result, the braking force of the eddy current deceleration device 1 will decrease. If the content of P is more than 0.030%, even when the contents of the other elements are within the ranges of the present embodiment, the hot workability and toughness of the steel material will markedly decrease, and the braking force of the eddy current deceleration device 1 will also decrease. Therefore, the content of P is 0.030% or less. A preferable upper limit of the content of P is 0.028%, more preferably is 0.026%, and further preferably is 0.025%. The content of P is preferably as low as possible. However, excessively reducing the content of P will raise the production cost. Therefore, when taking into consideration normal industrial production, a preferable lower limit of the content of P is 0.001%, and more preferably is 0.003%.

S: 0.030% or less

Sulfur (S) is an impurity that is unavoidably contained. In other words, the content of S is more than 0%. S reduces the hot workability and toughness of the steel material. S also increases the electrical resistance of the steel material. If the electrical resistance of the steel material increases, during braking of the eddy current deceleration device 1, the eddy current amount flowing through the cylindrical part 11 of the rotor 10 will decrease. As a result, the braking force of the eddy current deceleration device 1 will decrease. If the content of S is more than 0.030%, even when the contents of the other elements are within the ranges of the present embodiment, the hot workability and toughness of the steel material will markedly decrease, and furthermore, the braking force of the eddy current deceleration device 1 will decrease. Therefore, the content of S is 0.030% or less. A preferable upper limit of the content of S is 0.025%, more preferably is 0.022%, and further preferably is 0.020%. The content of S is preferably as low as possible. However, excessively reducing the content of S will raise the production cost. Therefore, when taking into consideration normal industrial production, a preferable lower limit of the content of S is 0.001%, and more preferably is 0.002%.

Cr: 0.30 to 2.00%

Chromium (Cr) increases the hardenability of the steel material and increases the high-temperature strength of the steel material. Cr also forms carbides and increases the high-temperature strength of the steel material. If the content of Cr is less than 0.30%, even when the contents of the other elements are within the ranges of the present embodiment, the aforementioned effects will not be sufficiently obtained. On the other hand, if the content of Cr is more than 1.30%, even when the contents of the other elements are within the ranges of the present embodiment, the electrical resistance of the steel material will excessively increase. If the electrical resistance of the steel material increases, during braking of the eddy current deceleration device 1, the eddy current amount flowing through the cylindrical part 11 of the rotor 10 of the eddy current deceleration device 1 will decrease. As a result, the braking force of the eddy current deceleration device 1 will decrease. Therefore, the content of Cr is within the range of 0.30 to 2.00%. A preferable lower limit of the content of Cr is 0.35%, more preferably is 0.40%, further preferably is 0.45%, and further preferably is 0.50%. A preferable upper limit of the content of Cr is 1.90%, more preferably is 1.80%, and further preferably is 1.75%.

Mo: 0.30 to 1.50%

Molybdenum (Mo) increases the hardenability of the steel material and increases the high-temperature strength of the steel material. Mo also forms carbides and thereby increases the high-temperature strength of the steel material. In addition, Mo increases the toughness of the steel material. If the content of Mo is less than 0.30%, even when the contents of the other elements are within the ranges of the present embodiment, the aforementioned effects will not be sufficiently obtained. On the other hand, if the content of Mo is more than 1.50%, even when the contents of the other elements are within the ranges of the present embodiment, the electrical resistance of the steel material will excessively increase. If the electrical resistance of the steel material increases, during braking of the eddy current deceleration device 1, the eddy current amount flowing through the cylindrical part 11 of the rotor 10 will decrease. As a result, the braking force of the eddy current deceleration device 1 will decrease. Therefore, the content of Mo is within the range of 0.30 to 1.50%. A preferable lower limit of the content of Mo is 0.32%, more preferably is 0.35%, further preferably is 0.38%, and further preferably is 0.40%. A preferable upper limit of the content of Mo is 1.40%, more preferably is 1.35%, further preferably is 1.30%, and further preferably is 1.25%.

V: 0.02 to 0.15%

Vanadium (V) forms carbides and thereby increases the high-temperature strength of the steel material. In addition, V suppresses coarsening of the grains. If the content of V is less than 0.02%, even when the contents of the other elements are within the ranges of the present embodiment, the aforementioned effects will not be sufficiently obtained. On the other hand, if the content of V is more than 0.15%, even when the contents of the other elements are within the ranges of the present embodiment, the electrical resistance of the steel material will excessively increase. If the electrical resistance of the steel material increases, during braking of the eddy current deceleration device 1, the eddy current amount flowing through the cylindrical part 11 of the rotor 10 will decrease. As a result, the braking force of the eddy current deceleration device 1 will decrease. Therefore, the content of V is within the range of 0.02 to 0.15%. A preferable lower limit of the content of V is 0.03%, more preferably is 0.04%, and further preferably is 0.05%. A preferable upper limit of the content of V is 0.13%, more preferably is 0.11%, further preferably is 0.10%.

Nb: 0.01 to 0.10%

Niobium (Nb) forms carbides and thereby increases the high-temperature strength of the steel material. In addition, Nb suppresses coarsening of the grains. If the content of Nb is less than 0.01%, even when the contents of the other elements are within the ranges of the present embodiment, the aforementioned effects will not be sufficiently obtained. On the other hand, if the content of Nb is more than 0.10%, even when the contents of the other elements are within the ranges of the present embodiment, the electrical resistance of the steel material will excessively increase. If the electrical resistance of the steel material increases, during braking of the eddy current deceleration device 1, the eddy current amount flowing through the cylindrical part 11 of the rotor 10 will decrease. As a result, the braking force of the eddy current deceleration device 1 will decrease. Therefore, the content of Nb is within the range of 0.01 to 0.10%. A preferable lower limit of the content of Nb is 0.02%, more preferably is 0.03%, and further preferably is 0.04%. A preferable upper limit of the content of Nb is 0.09%, more preferably is 0.08%, and further preferably is 0.06%.

Sol. Al: 0.001 to 0.040%

Aluminum (Al) combines with nitrogen (N) to form AlN, and refines the grains of the steel material. If the content of sol. Al is less than 0.001%, even when the contents of the other elements are within the ranges of the present embodiment, the aforementioned effect will not be sufficiently obtained. On the other hand, if the content of sol. Al is more than 0.040%, even when the contents of the other elements are within the ranges of the present embodiment, the electrical resistance of the steel material will excessively increase. If the electrical resistance of the steel material increases, during braking of the eddy current deceleration device 1, the eddy current amount flowing through the cylindrical part 11 of the rotor 10 will decrease. As a result, the braking force of the eddy current deceleration device 1 will decrease. Therefore, the content of sol. Al is within the range of 0.001 to 0.040%. A preferable lower limit of the content of sol. Al is 0.005%, more preferably is 0.0 10%, and further preferably is 0.015%. A preferable upper limit of the content of sol. Al is less than 0.040%, more preferably is 0.038%, further preferably is 0.035%, and further preferably is 0.030%. Note that, in the present description, the content of "sol. Al" means the content of "acid-soluble Al".

B: 0.0005 to 0.050%

Boron (B) increases the hardenability of the steel material, and increases the high-temperature strength of the steel material. If the content of B is less than 0.0005%, even when the contents of the other elements are within the ranges of the present embodiment, the aforementioned effects will not be sufficiently obtained. On the other hand, if the content of B is more than 0.0050%, even when the contents of the other elements are within the ranges of the present embodiment, the electrical resistance of the steel material will excessively increase. If the electrical resistance of the steel material increases, during braking of the eddy current deceleration device 1, the eddy current amount flowing through the cylindrical part 11 of the rotor 10 will decrease. As a result, the braking force of the eddy current deceleration device 1 will decrease. If the content of B is more than 0.0050%, in addition, in some cases the toughness of the steel material may decrease. Therefore, the content of B is within the range of 0.0005 to 0.0050%. A preferable lower limit of the content of B is 0.0008%, more preferably is 0.0010%, further preferably is 0.0012%, further preferably is 0.0014%, and further preferably is 0.0015%. A preferable upper limit of the content of B is 0.0045%, more preferably is 0.0040%, further preferably is 0.0035%, and further preferably is 0.0030%.

N: 0.001 to 0.010%.

Nitrogen (N) forms AlN and/or TiN, which increases the high-temperature strength of the steel material. AlN and/or TiN also refine the grains of the steel material. If the content of N is less than 0.001%, even when the contents of the other elements are within the ranges of the present embodiment, the aforementioned effects will not be sufficiently obtained. On the other hand, if the content of N is more than 0.010%, even when the contents of the other elements are within the ranges of the present embodiment, N will form BN and thereby reduce the high-temperature strength of the steel material. Therefore, the content of N is within the range of 0.001 to 0.010%. A preferable lower limit of the content of N is 0.002%. A preferable upper limit of the content of N is 0.009%, more preferably is 0.008%, further preferably is 0.006%, and further preferably is 0.005%.

The balance in the chemical composition of the cylindrical part 11 of the rotor 1 0 of the eddy current deceleration device 1 of the present embodiment is Fe and impurities. Here, the term "impurities" refers to elements which, during industrial production of the cylindrical part 11 of the rotor 10 of the present embodiment, are mixed in from ore or scrap that is used as a raw material, or from the production environment or the like, and which are allowed within a range that does not adversely affect the cylindrical part 11 of the rotor 10 of the present embodiment.

[Regarding optional elements]

The chemical composition of the cylindrical part 11 of the rotor 10 of the eddy current deceleration device 1 of the present embodiment may also contain one or more elements selected from the group consisting of Cu, Ni, and Ti in lieu of a part of Fe. Each of these elements is an optional element, and increases the high-temperature strength of the steel material.

Cu: 0 to 0.20%

Copper (Cu) is an optional element, and need not be contained. In other words, the content of Cu may be 0%. When Cu is contained, Cu increases the hardenability of the steel material, and increases the high-temperature strength of the steel material. If even a small amount of Cu is contained, the aforementioned effects will be obtained to a certain extent. However, if the content of Cu is more than 0.20%, even when the contents of the other elements are within the ranges of the present embodiment, the electrical resistance of the steel material will excessively increase. If the electrical resistance of the steel material increases, during braking of the eddy current deceleration device 1, the eddy current amount flowing through the cylindrical part 11 of the rotor 10 of the eddy current deceleration device 1 will decrease. As a result, the braking force of the eddy current deceleration device 1 will decrease. Therefore, the content of Cu is within the range of 0 to 0.20%, and the content of Cu in a case where Cu is contained is 0.20% or less. A preferable lower limit of the content of Cu is more than 0%, more preferably is 0.01%, further preferably is 0.02%, and further preferably is 0.03%. A preferable upper limit of the content of Cu is 0.15%, more preferably is 0.12%, and further preferably is 0.10%.

Ni: 0 to 0.20%

Nickel (Ni) is an optional element, and need not be contained. In other words, the content of Ni may be 0%. When Ni is contained, Ni increases the hardenability of the steel material, and increases the high-temperature strength of the steel material. If even a small amount of Ni is contained, the aforementioned effects will be obtained to a certain extent. However, if the content of Ni is more than 0.20%, even when the contents of the other elements are within the ranges of the present embodiment, the electrical resistance of the steel material will excessively increase. If the electrical resistance of the steel material increases, during braking of the eddy current deceleration device 1, the eddy current amount flowing through the cylindrical part 11 of the rotor 10 of the eddy current deceleration device 1 will decrease. As a result, the braking force of the eddy current deceleration device 1 will decrease. Therefore, the content of Ni is within the range of 0 to 0.20%, and the content of Ni in a case where Ni is contained is 0.20% or less. A preferable lower limit of the content of Ni is more than 0%, more preferably is 0.01%, further preferably is 0.02%, and further preferably is 0.03%. A preferable upper limit of the content of Ni is 0.15%, more preferably is 0.12%, and further preferably is 0.10%.

Ti: 0 to 0.050%

Titanium (Ti) is an optional element, and need not be contained. That is, the content of Ti may be 0%. When Ti is contained, Ti forms Ti carbo-nitrides and increases the high-temperature strength of the steel material. In addition, Ti forms TiN, and thereby suppresses coarsening of the grains. If even a small amount of Ti is contained, the aforementioned effects will be obtained to a certain extent. However, if the content of Ti is more than 0.050%, even when the contents of the other elements are within the ranges of the present embodiment, the electrical resistance of the steel material will excessively increase. If the electrical resistance of the steel material increases, during braking of the eddy current deceleration device 1, the eddy current amount flowing through the cylindrical part 11 of the rotor 10 of the eddy current deceleration device 1 will decrease. As a result, the braking force of the eddy current deceleration device 1 will decrease. Furthermore, if the content of Ti is more than 0.050%, the toughness of the steel material will decrease. Therefore, the content of Ti is within the range of 0 to 0.050%, and the content of Ti in a case where Ti is contained is 0.050% or less. A preferable lower limit of the content of Ti is more than 0%, more preferably is 0.001%, further preferably is 0.003%, and further preferably is 0.005%. A preferable upper limit of the content of Ti is 0.040%, more preferably is 0.030%, and further preferably is 0.020%.

[Regarding Formula (1)]

In addition to satisfying the chemical composition described above, the chemical composition of the cylindrical part 11 of the rotor 10 of the eddy current deceleration device 1 of the present embodiment also satisfies the following Formula (1):

$$Cr + 4Si + 3sol.\ Al + Mo \le 3.00 \qquad (1)$$

where, a content in percent by mass of a corresponding element in the chemical composition of the cylindrical part 11 of the rotor 10 of the present embodiment is substituted for each symbol of an element in Formula (1).

F1 (= Cr + 4Si + 3sol. Al + Mo) is an index that indicates the level of electrical resistance in the rotor 10 for an eddy current deceleration device that includes the cylindrical part 11 having the chemical composition described above. That is, on the premise that the cylindrical part 11 of the rotor 10 for an eddy current deceleration device has the chemical composition described above, F1 serves as an index that indicates the level of electrical resistance. If F1 is more than 3.00, even when the contents of the elements in the chemical composition are within the ranges of the present embodiment, the electrical resistance of the steel material will excessively increase. If the electrical resistance of the steel material increases, during braking of the eddy current deceleration device 1, the eddy current amount flowing through the cylindrical part 11 of the rotor 10 of the eddy current deceleration device 1 will decrease. As a result, the braking force of the eddy current deceleration device 1 will decrease. Therefore, in the chemical composition of the cylindrical part 11 of the rotor 10 of the eddy current deceleration device 1 of the present embodiment, F1 is 3.00 or less. As a result, in the rotor 10 of the present embodiment, not only can the high-temperature strength be increased, but the electrical resistance can also be sufficiently reduced.

In the chemical composition of the cylindrical part 11 of the rotor 10 of the eddy current deceleration device 1 of the present embodiment, a preferable upper limit of F1 is 2.95, more preferably is 2.90, further preferably is 2.85, and further preferably is 2.80. In the chemical composition of the cylindrical part 11 of the rotor 10 of the eddy current deceleration device 1 of the present embodiment, the lower limit of F1 is not particularly limited. However, on the premise of having the chemical composition described above, in the cylindrical part 11 of the rotor 10 of the eddy current deceleration device 1 of the present embodiment, the lower limit of F1 is determined based on the lower limit values of the respective components. That is, in the cylindrical part 11 of the present embodiment, the lower limit of F1 determined based on the chemical composition described above is 0.64. Note that, F1 in the present embodiment is a value obtained by rounding off the third decimal place of the calculated numerical value.

[Regarding microstructure]

The cylindrical part 11 of the rotor 10 of the present embodiment has a microstructure in which the total area fraction of martensite and bainite is 99% or more. In other words, the microstructure of the cylindrical part 11 of the rotor 10 for an eddy current deceleration device of the present embodiment is a structure that is mainly composed of martensite and/or bainite. The term "martensite and bainite" as used in the present description also includes tempered martensite and tempered bainite. In the microstructure of the cylindrical part 11 of the rotor 10 of the present embodiment, the balance other than martensite and bainite is ferrite. In other words, the area fraction of ferrite is 1% or less.

Note that, apart from martensite, bainite, and ferrite, precipitates as typified by the aforementioned carbides, and inclusions are also present in the microstructure of the cylindrical part 11. However, these precipitates and inclusions are extremely small, and it is difficult to confirm the area of these precipitates and inclusions by microstructure observation that is described later. For this reason, precipitates and inclusions are ignored when determining the area fraction of martensite and bainite and the area fraction of ferrite. Hence, precipitates and inclusions present in the martensite and bainite are included in the area fraction of martensite and bainite, and precipitates and inclusions present in the ferrite are included in the area fraction of ferrite.

Further, in microstructure observation to be described later, it is very difficult to distinguish between martensite and bainite. On the other hand, ferrite can be distinguished very easily from martensite and bainite by contrast. Therefore, in the microstructure observation, a region other than ferrite is recognized as "martensite and bainite".

The microstructure of the cylindrical part 11 of the rotor 10 for an eddy current deceleration device of the present embodiment also influences strength. In the microstructure of the cylindrical part 11 of the rotor 1 0 for an eddy current deceleration device of the present embodiment, if the total area fraction of martensite and bainite is 99% or less and the area fraction of ferrite is more than 1%, even if the chemical composition described above including F1 is satisfied, sufficient high-temperature strength will not be obtained. On the other hand, if the total area fraction of martensite and bainite is 99% or more and the area fraction of ferrite is 1% or less, on the premise that the contents of the respective elements in the chemical composition are within the ranges of the present embodiment, high high-temperature strength will be obtained.

In the present embodiment, the total area fraction of martensite and bainite, and the area fraction of ferrite in the microstructure can be measured by the following method. A sample is taken from the center position of the wall thickness of the cylindrical part 11 of the rotor 10. The size of the sample is not particularly limited as long as an observation visual field (200 $\mu$m $\times$ 100 $\mu$m), described later, can be secured. Of the entire surface of the sample, an observation surface that includes the aforementioned observation visual field is mirror-polished, The sample after mirror-polishing is subjected to etching by immersion for around 10 seconds in a Nital solution, to reveal the microstructure at the observation surface. An arbitrary one visual field (observation visual field) within the observation surface where the structure was revealed by etching is observed using an optical microscope with a magnification of 500 times. The visual field area of the observation visual field is set to 20,000 $\mu$m$^2$ (200 $\mu$m $\times$ 100 $\mu$m).

As mentioned above, in the observation visual field, ferrite can be easily distinguished from martensite and bainite based on contrast. Therefore, the ferrite in the observation visual field is identified, and the area of the identified ferrite is determined. The area fraction (%) of ferrite is then determined by dividing the area of ferrite by the total area of the observation visual field. Note that, the area fraction (%) of ferrite is a value obtained by rounding off the second decimal place of the calculated numerical value. As mentioned above, in the microstructure of the cylindrical part 11 of the rotor 10 of the present embodiment, the balance other than ferrite is martensite and/or bainite. Thus, the total area fraction (%) of martensite and bainite is determined by the following equation.

Total area fraction of martensite and bainite = 100.0 - area fraction (%) of ferrite

[High-temperature strength]

The cylindrical part 11 of the rotor 10 of the present embodiment has a yield stress of 120 to 250 MPa at 700°C. The term "yield stress" as used in the present description means 0.2% proof stress obtained in a tensile test at 700°C that is described below. In the cylindrical part 11 of the rotor 10 of the present embodiment, if the yield stress at 700°C is less than 120 MPa, the desired high-temperature strength will not be obtained. On the other hand, in the cylindrical part 11 of the rotor 10 of the present embodiment, if the yield stress at 700°C is more than 250 MPa, in some cases the high-temperature strength will be too high and toughness of the cylindrical part 11 will decrease. Therefore, in the present embodiment, the cylindrical part 11 of the rotor 10 has a yield stress of 120 to 250 MPa at 700°C.

A preferable lower limit of the yield stress at 700°C of the cylindrical part 11 of the rotor 10 of the present embodiment is 125 MPa, and more preferably is 130 MPa. A preferable upper limit of the yield stress at 700°C of the cylindrical part 11 of the rotor 10 of the present embodiment is 245 MPa, and more preferably is 240 MPa.

In the present embodiment, the yield stress (MPa) at 700°C of the cylindrical part 11 of the rotor 10 is determined by performing a tensile test conforming to JIS G 0567 (2012). Specifically, a tensile test specimen is taken from the center position of the wall thickness of the cylindrical part 11 of the rotor 10. The length of the parallel portion of the tensile test specimen is set to 40 mm, and the diameter of the parallel portion is set to 6 mm. The parallel portion of the tensile test specimen is to be parallel to the central axis of the cylindrical part 11. The tensile test specimen is heated using a reheating furnace to make the temperature of the tensile test specimen 700°C, and the tensile test specimen is held at that temperature for 10 minutes. After being held at 700°C for 10 minutes, the tensile test specimen is then subjected to a tensile test in the atmosphere, and a stress-strain curve is obtained. The 0.2% proof stress determined based on the offset method from the obtained stress-strain curve is defined as the yield stress (MPa). Note that, in the present embodiment, a value obtained by rounding off the first decimal place of the calculated numerical value is adopted as the yield stress at 700°C (MPa).

[Electrical resistance]

The cylindrical part 11 of the rotor 10 according to the present embodiment has the aforementioned chemical composition including Formula (1), and the aforementioned microstructure. As a result, the cylindrical part 11 of the rotor 10 according to the present embodiment exhibits low electrical resistance even though the yield stress at 700°C is 120 to 250 MPa. In the present embodiment, the electrical resistance of the cylindrical part 11 can be evaluated by a method conforming to JIS C 2526 (1994).

Specifically, a test specimen including the center position of the thickness of the cylindrical part 11 of the rotor 10 is taken. The test specimen is taken as a standard test specimen of $3\,mm \times 4\,mm \times 60\,mm$. The electrical resistance ($\mu\Omega cm$) of the test specimen is determined at normal temperature ($20 \pm 15°C$) by the double bridge method. Note that, a value obtained by rounding off the second decimal place of the calculated numerical value is adopted as the electrical resistance ($\mu\Omega cm$) of the test specimen in the present embodiment. If the determined electrical resistance is 20.5 $\mu\Omega cm$ or less, the cylindrical part 11 can be evaluated as having low electrical resistance.

[Production method]

One example of a method for producing the rotor 10 for an eddy current deceleration device of the present embodiment will now be described. The production method described hereunder is one example of a method for producing the rotor 10 for an eddy current deceleration device of the present embodiment. Therefore, the rotor 10 for an eddy current deceleration device having the configuration described above may be produced by another production method that is different from the production method described hereunder. However, the production method described hereunder is a preferable example of a method for producing the rotor 10 for an eddy current deceleration device of the present embodiment.

The method for producing the rotor 10 for an eddy current deceleration device of the present embodiment includes: a preparation process of producing an intermediate product corresponding to the cylindrical part 11; a quenching process of subjecting the prepared intermediate product to quenching; a tempering process of subjecting the intermediate product after quenching to tempering; a working process of subjecting the intermediate product after tempering to working to form the cylindrical part 11; and a rotor forming process of producing the rotor 10 for an eddy current deceleration device by using the cylindrical part 11. Hereunder, each of these processes is described.

[Preparation process]

In the preparation process, an intermediate product having the chemical composition described above is prepared. As used here, the term "intermediate product" corresponds to the cylindrical part 11. A method for producing the intermediate product is not particularly limited as long as the intermediate product has the chemical composition described above. The preparation process, for example, may include a process of preparing a raw material (raw material preparation process), and a process of performing hot working on the prepared raw material to produce the intermediate product (hot working process). Hereunder, a case where the preparation process includes a raw material preparation process and a hot working process is described in detail.

[Raw material preparation process]

In the raw material preparation process, a raw material having a chemical composition in which the contents of the respective elements are within the ranges of the present embodiment is prepared. The raw material may be a raw material that is supplied from a third party. The raw material may also be produced. In the case of producing the raw material, for example, the raw material is produced by the following method.

A molten steel having a chemical composition in which the contents of the respective elements are within the ranges of the present embodiment is produced. The refining method is not particularly limited, and a well-known method may be used. For example, hot metal produced by a well-known method is subjected to refining (primary refining) using a converter. Molten steel tapped from the converter is subjected to a well-known secondary refining. In the secondary refining, alloying elements subjected to composition adjustment are added to thereby produce a molten steel having a chemical composition in which the contents of the respective elements are within the ranges of the present embodiment.

The molten steel produced by the aforementioned refining method is used to produce a raw material by a well-known casting process. For example, an ingot may be produced by an ingot-making process using the molten steel. Alternatively, a bloom or a billet may be produced by a continuous casting process using the molten steel. After the produced bloom or ingot is heated to within a range of 1000 to 1300°C, hot working may be performed to produce a billet. The hot working is, for example, hot rolling, hot forging, or the like. The thus-produced billet (billet produced by continuous casting, or billet produced by subjecting a bloom or an ingot to hot working) is adopted as the raw material of the rotor 10 for an eddy current deceleration device.

[Hot working process]

The raw material prepared in the raw material preparation process is subjected to hot working to produce an intermediate product corresponding to the cylindrical part 11. The hot working may be hot forging, or may be hot forging and hot rolling. In this case, first, the raw material is heated to 1000 to 1300°C. The raw material after heating is subjected to hot forging and formed so as to have predetermined dimensions. After hot forging, hot rolling may also be performed.

As described above, an intermediate product is prepared in the preparation process. The intermediate product may be prepared by performing the aforementioned raw material preparation process and hot working process, or may be prepared by purchasing an intermediate product produced by a third party. Hereunder, the quenching process is described in detail.

[Quenching process]

In the quenching process, the intermediate product prepared in the aforementioned preparation process is subjected to quenching. In the present description, the term "quenching" means rapidly cooling the intermediate product whose temperature is equal to or higher than the $A_3$ point. In the quenching process, the quenching temperature is, for example, 880°C or more. Note that, in the present description the term "quenching temperature" means the temperature of the intermediate product before rapid cooling. If the quenching temperature is too low, in some cases precipitates such as carbides may not sufficiently dissolve in the microstructure of the intermediate product. In such a case, in the tempering process that is described later, precipitates will coarsen and the high-temperature strength of the produced rotor 10 will decrease. Furthermore, if the quenching temperature is too low, in some cases the microstructure of the intermediate product will not transform to austenite single-phase, and the area fraction of ferrite remaining in the microstructure of the produced rotor 10 will be more than 1%. In such a case, the high-temperature strength of the rotor 10 will decrease. Therefore, in the present embodiment, a preferable quenching temperature is 880°C or more. In the quenching process according to the present embodiment, a more preferable lower limit of the quenching temperature is 890°C, and further preferably is 900°C. Note that, although not particularly limited, the upper limit of the quenching temperature is, for example, 970°C.

In the quenching process, in the case of performing rapid cooling after heating and holding the intermediate product, the time for which the intermediate product is to be held at the aforementioned quenching temperature is, for example, 0.5 to 3.0 hours. Further, in the quenching process, it suffices if the intermediate product can be cooled at a faster cooling rate than if the intermediate product is allowed to cool. Methods for rapidly cooling the intermediate product are, for example, water cooling, mist cooling, and oil cooling. Further, in the rapid cooling, for example, the average cooling rate from the cooling start temperature (quenching temperature) to 400°C is set to 2 to 20°C/sec. Hereunder, the tempering process is described in detail.

[Tempering process]

In the tempering process, the intermediate product subjected to quenching in the aforementioned quenching process is subjected to tempering. In the present description, the term "tempering" means holding the intermediate product at a temperature that is less than the $A_{c1}$ point. In the tempering process, a preferable tempering temperature is within the range of 700°C to less than the $A_{c1}$ point. Ordinarily, the high-temperature strength tends to decrease as the tempering temperature increases. However, as mentioned above, in the rotor 10 according to the present embodiment, the content of Cr is increased in the chemical composition of the cylindrical part 11. Therefore, in the tempering process according to the present embodiment, it is also possible to perform tempering at a high temperature.

Here, when subjecting the intermediate product having the chemical composition described above to tempering, if the tempering temperature is 700°C or more, even if the rotor 10 is heated by Joule heating that occurs together with the eddy current during braking and the temperature becomes a high temperature that exceeds 650°C and reaches about 700°C, it will be difficult for changes to occur in the microstructure. In addition, if the temperature is less than 700°C, the toughness of the steel material may decrease. Therefore, preferably the tempering temperature is 700°C or more. On the other hand, if the tempering temperature is equal to or higher than the $A_{c1}$ point, in some cases austenite may remain in a part of the microstructure of the intermediate product, or precipitates such as carbides may coarsen. In such a case, there is a possibility that the high-temperature strength will decrease. Therefore, in the tempering process according to the present embodiment, preferably the tempering temperature is set within the range of 700°C to less than the $A_{c1}$ point. Note that, the holding time for tempering is, for example, 0.5 to 5.0 hours. Further, the cooling method after tempering is, for example, allowing the intermediate product to cool.

[Working process]

In the working process, the intermediate product subjected to tempering in the aforementioned tempering process is subjected to working to form the cylindrical part 11. Specifically, the cooling fins 11F are formed by machining the outer peripheral surface of the intermediate product after tempering. A well-known method may be used to perform the machining. The cylindrical part 11 is produced by the above processes.

[Rotor forming process]

In the rotor forming process, the produced cylindrical part 11 is used to produce the rotor 10 for an eddy current deceleration device. Specifically, the arm part 12 attached to the wheel part 13 is attached to the produced cylindrical part 11 to thereby produce the rotor 10 for an eddy current deceleration device. The attachment method may be welding or may be another method.

The rotor 10 for an eddy current deceleration device of the present embodiment can be produced by the production method described above. Note that, a method for producing the rotor 10 for an eddy current deceleration device of the present embodiment is not limited to the production method described above, and as long as the rotor 10 for an eddy current deceleration device that has the configuration described above can be produced, the rotor 10 for an eddy current deceleration device of the present embodiment may be produced by another production method that is different from the above production method. However, the above production method is a favorable example for producing the rotor 10 for an eddy current deceleration device of the present embodiment. Hereunder, the rotor 10 for an eddy current deceleration device according to the present embodiment is described more specifically by way of Examples.

EXAMPLES

Molten steels having the chemical compositions shown in Table 1 were produced. F1 (= Cr + 4Si + 3sol. Al + Mo) as determined based on the chemical composition shown in Table 1 and the definition described above is also shown in Table 1.

[Table 1]

TABLE 1

| Test No. | Chemical Composition (unit is mass%; balance is Fe and impurities) | | | | | | | | | | | | | | | F1 |
| --- | --- | --- | --- | --- | --- | --- | --- | --- | --- | --- | --- | --- | --- | --- | --- | --- |
| | C | Si | Mn | P | S | Cr | Mo | V | Nb | sol.Al | B | N | Cu | Ni | Ti | |
| 1 | 0.08 | 0.11 | 0.71 | 0.025 | 0.020 | 1.30 | 0.39 | 0.12 | 0.03 | 0.039 | 0.0023 | 0.004 | - | - | - | 2.25 |
| 2 | 0.10 | 0.06 | 0.35 | 0.007 | 0.008 | 0.50 | 0.42 | 0.05 | 0.03 | 0.031 | 0.0015 | 0.005 | 0.08 | - | - | 1.25 |
| 3 | 0.09 | 0.02 | 0.62 | 0.012 | 0.012 | 0.71 | 0.55 | 0.07 | 0.06 | 0.022 | 0.0030 | 0.003 | - | 0.06 | - | 1.41 |
| 4 | 0.11 | 0.03 | 0.41 | 0.018 | 0.015 | 1.21 | 0.72 | 0.03 | 0.08 | 0.033 | 0.0020 | 0.008 | - | - | 0.029 | 2.15 |
| 5 | 0.08 | 0.03 | 0.90 | 0.009 | 0.009 | 0.77 | 0.51 | 0.05 | 0.03 | 0.002 | 0.0027 | 0.001 | - | - | - | 1.41 |
| 6 | 0.13 | 0.03 | 0.88 | 0.019 | 0.003 | 0.62 | 0.55 | 0.08 | 0.02 | 0.038 | 0.0007 | 0.003 | - | - | - | 1.40 |
| 7 | 0.07 | 0.04 | 0.65 | 0.023 | 0.001 | 0.59 | 0.60 | 0.02 | 0.02 | 0.019 | 0.0022 | 0.005 | 0.03 | 0.05 | - | 1.41 |
| 8 | 0.12 | 0.07 | 0.50 | 0.008 | 0.006 | 0.48 | 0.88 | 0.06 | 0.01 | 0.025 | 0.0018 | 0.004 | - | - | - | 1.72 |
| 9 | 0.09 | 0.03 | 0.62 | 0.025 | 0.020 | 0.91 | 0.52 | 0.08 | 0.05 | 0.034 | 0.0044 | 0.009 | - | - | 0.026 | 1.65 |
| 10 | 0.08 | 0.04 | 0.41 | 0.025 | 0.020 | 0.87 | 0.51 | 0.13 | 0.10 | 0.009 | 0.0038 | 0.004 | - | - | - | 1.57 |
| 11 | 0.07 | 0.05 | 0.58 | 0.011 | 0.002 | 1.91 | 0.48 | 0.10 | 0.04 | 0.024 | 0.0019 | 0.005 | - | - | - | 2.66 |
| 12 | 0.09 | 0.04 | 0.43 | 0.020 | 0.008 | 0.69 | 1.39 | 0.11 | 0.05 | 0.018 | 0.0022 | 0.007 | - | - | - | 2.29 |
| 13 | 0.11 | 0.08 | 0.59 | 0.015 | 0.012 | 0.74 | 0.95 | 0.14 | 0.09 | 0.019 | 0.0011 | 0.009 | 0.18 | | | 2.07 |
| 14 | 0.10 | 0.05 | 0.44 | 0.024 | 0.017 | 0.97 | 0.57 | 0.09 | 0.03 | 0.023 | 0.0028 | 0.007 | | 0.17 | | 1.81 |
| 15 | 0.07 | 0.08 | 0.60 | 0.013 | 0.002 | 0.54 | 0.38 | 0.05 | 0.02 | 0.035 | 0.0036 | 0.007 | | | 0.049 | 1.35 |
| 16 | 0.08 | 0.12 | 0.51 | 0.013 | 0.003 | 1.90 | 0.32 | 0.13 | 0.04 | 0.016 | 0.0042 | 0.005 | - | - | - | 2.75 |
| 17 | 0.07 | 0.08 | 0.68 | 0.014 | 0.002 | 0.69 | 1.24 | 0.12 | 0.08 | 0.022 | 0.0039 | 0.003 | - | - | - | 2.32 |
| 18 | 0.09 | 0.14 | 0.49 | 0.010 | 0.002 | 1.67 | 1.12 | 0.14 | 0.05 | 0.024 | 0.0041 | 0.004 | - | - | - | 3.42 |
| 19 | 0.06 | 0.14 | 0.51 | 0.017 | 0.009 | 1.92 | 1.47 | 0.12 | 0.08 | 0.038 | 0.0008 | 0.005 | - | - | - | 4.06 |
| 20 | 0.06 | 0.14 | 0.31 | 0.013 | 0.008 | 1.83 | 1.27 | 0.05 | 0.04 | 0.029 | 0.0046 | 0.009 | 0.13 | - | - | 3.75 |
| 21 | 0.08 | 0.13 | 0.67 | 0.015 | 0.011 | 1.70 | 1.22 | 0.04 | 0.06 | 0.037 | 0.0018 | 0.004 | - | 0.10 | - | 3.55 |
| 22 | 0.08 | 0.11 | 0.73 | 0.011 | 0.021 | 1.68 | 1.39 | 0.08 | 0.06 | 0.025 | 0.0023 | 0.005 | - | - | 0.024 | 3.59 |
| 23 | 0.03 | 0.04 | 0.33 | 0.021 | 0.011 | 0.31 | 0.33 | 0.14 | 0.08 | 0.003 | 0.0007 | 0.009 | - | - | - | 0.81 |
| 24 | 0.21 | 0.14 | 0.97 | 0.025 | 0.020 | 1.30 | 0.87 | 0.06 | 0.05 | 0.033 | 0.0023 | 0.004 | - | - | - | 2.83 |

EP 4 628 612 A1

(continued)

| Test No. | Chemical Composition (unit is mass%; balance is Fe and impurities) | | | | | | | | | | | | | | | F1 |
|---|---|---|---|---|---|---|---|---|---|---|---|---|---|---|---|---|
| | C | Si | Mn | P | S | Cr | Mo | V | Nb | sol.Al | B | N | Cu | Ni | Ti | |
| 25 | 0.08 | 0.49 | 0.71 | 0.022 | 0.011 | 0.44 | 0.81 | 0.13 | 0.03 | 0.021 | 0.0022 | 0.005 | - | - | - | 3.27 |
| 26 | 0.14 | 0.09 | 1.82 | 0.019 | 0.001 | 0.77 | 0.51 | 0.09 | 0.08 | 0.035 | 0.0033 | 0.002 | - | - | - | 1.75 |
| 27 | 0.07 | 0.12 | 0.69 | 0.087 | 0.004 | 1.23 | 0.87 | 0.05 | 0.10 | 0.037 | 0.0019 | 0.007 | - | - | 0.002 | 2.69 |
| 28 | 0.09 | 0.11 | 0.55 | 0.009 | 0.058 | 1.07 | 0.67 | 0.14 | 0.08 | 0.036 | 0.0010 | 0.004 | - | - | - | 2.29 |
| 29 | 0.07 | 0.07 | 0.39 | 0.011 | 0.007 | 0.24 | 0.44 | 0.05 | 0.05 | 0.031 | 0.0038 | 0.003 | - | 0.06 | - | 1.05 |
| 30 | 0.08 | 0.02 | 0.72 | 0.015 | 0.011 | 2.49 | 0.77 | 0.08 | 0.07 | 0.022 | 0.0044 | 0.005 | - | - | - | 3.41 |
| 31 | 0.10 | 0.13 | 0.83 | 0.024 | 0.014 | 1.23 | 2.30 | 0.07 | 0.02 | 0.030 | 0.0039 | 0.002 | - | - | - | 4.14 |
| 32 | 0.06 | 0.10 | 0.73 | 0.007 | 0.009 | 0.91 | 1.11 | 0.34 | 0.07 | 0.023 | 0.0041 | 0.004 | - | - | 0.025 | 2.49 |
| 33 | 0.10 | 0.13 | 0.77 | 0.013 | 0.006 | 1.75 | 0.61 | 0.11 | 0.29 | 0.005 | 0.0026 | 0.001 | - | - | - | 2.90 |
| 34 | 0.05 | 0.10 | 0.82 | 0.028 | 0.016 | 1.47 | 1.01 | 0.02 | 0.01 | 0.091 | 0.0033 | 0.004 | 0.04 | - | - | 3.15 |
| 35 | 0.09 | 0.05 | 0.80 | 0.022 | 0.009 | 0.85 | 0.51 | 0.04 | 0.05 | 0.026 | 0.0121 | 0.003 | - | - | - | 1.64 |
| 36 | 0.07 | 0.10 | 0.85 | 0.005 | 0.007 | 0.71 | 0.54 | 0.05 | 0.09 | 0.033 | 0.0048 | 0.051 | - | - | 0.013 | 1.75 |

The symbol "-" in Table 1 means that the content of the corresponding element was less than the detection limit. For example, for the content of Cu and the content of Ni of Test Number 1, the symbol "-" means that the value rounded off to two decimal places was 0%. For the content of Ti of Test Number 1, the symbol "-" means that the value rounded off to three decimal places was 0%. The respective molten steels were used to produce a 30-kg columnar ingot having a diameter of 120 mm by an ingot-making process.

After the ingot was heated to 1250°C, hot forging was performed to produce a steel plate having a thickness of 30 mm as a pseudo intermediate product. The pseudo intermediate product was subjected to quenching in which the pseudo intermediate product was held at a quenching temperature (°C) for a quenching time (hours) which are described in Table 2, followed by rapid cooling (oil cooling). The pseudo intermediate product of each test number after quenching was subjected to tempering. Specifically, tempering was performed by holding the pseudo intermediate product at a tempering temperature (°C) for a tempering time (hours) which are described in Table 2. A pseudo rotor (steel plate) of each test number which simulated a rotor for an eddy current deceleration device was produced by the above production process.

[Table 2]

TABLE 2

| Test No. | Quenching Temperature (°C) | Quenching Time (hours) | Tempering Temperature (°C) | Tempering Time (hours) | Total Area Fraction of Martensite and Bainite (%) | Yield Stress at 700°C (MPa) | Electrical Resistance (μΩcm) |
|---|---|---|---|---|---|---|---|
| 1 | 900 | 1.0 | 700 | 1.5 | ≥99 | 229 | 20.3 |
| 2 | 900 | 1.5 | 710 | 2.0 | ≥99 | 128 | 18.5 |
| 3 | 900 | 2.0 | 720 | 1.0 | ≥99 | 155 | 19.1 |
| 4 | 920 | 2.0 | 730 | 1.0 | ≥99 | 234 | 19.4 |
| 5 | 920 | 1.5 | 720 | 1.5 | ≥99 | 160 | 19.5 |
| 6 | 920 | 2.0 | 730 | 1.5 | ≥99 | 221 | 19.2 |
| 7 | 950 | 1.0 | 710 | 3.0 | ≥99 | 167 | 19.1 |
| 8 | 950 | 1.0 | 740 | 1.0 | ≥99 | 156 | 18.8 |
| 9 | 950 | 2.0 | 700 | 3.0 | ≥99 | 198 | 19.7 |
| 10 | 950 | 2.0 | 730 | 1.5 | ≥99 | 203 | 19.1 |
| 11 | 900 | 2.0 | 720 | 1.0 | ≥99 | 241 | 20.2 |
| 12 | 920 | 2.0 | 730 | 1.0 | 299 | 246 | 18.9 |
| 13 | 920 | 2.0 | 740 | 1.0 | ≥99 | 180 | 19.5 |
| 14 | 950 | 1.0 | 720 | 2.0 | ≥99 | 202 | 19.3 |
| 15 | 950 | 1.0 | 720 | 2.0 | ≥99 | 219 | 19.6 |
| 16 | 850 | 1.5 | 700 | 2.0 | 85 | 108 | 20.5 |
| 17 | 900 | 2.0 | 670 | 2.0 | ≥99 | 287 | 19.8 |
| 18 | 900 | 1.0 | 700 | 3.0 | ≥99 | 245 | 20.6 |
| 19 | 920 | 2.0 | 740 | 1.0 | ≥99 | 169 | 21.4 |
| 20 | 920 | 2.0 | 740 | 1.5 | ≥99 | 193 | 20.9 |
| 21 | 950 | 1.0 | 720 | 2.0 | ≥99 | 237 | 21.1 |
| 22 | 920 | 2.0 | 740 | 1.0 | ≥99 | 152 | 21.2 |
| 23 | 900 | 1.0 | 730 | 1.0 | ≥99 | 104 | 18.6 |
| 24 | 900 | 2.0 | 700 | 1.5 | ≥99 | 279 | 20.6 |

(continued)

| Test No. | Quenching Temperature (°C) | Quenching Time (hours) | Tempering Temperature (°C) | Tempering Time (hours) | Total Area Fraction of Martensite and Bainite (%) | Yield Stress at 700°C (MPa) | Electrical Resistance (μΩcm) |
|---|---|---|---|---|---|---|---|
| 25 | 920 | 2.0 | 720 | 3.0 | ≥99 | 223 | 20.7 |
| 26 | 920 | 1.0 | 660 | 2.0 | ≥99 | 301 | 20.8 |
| 27 | 920 | 2.0 | 740 | 1.0 | ≥99 | 228 | 20.7 |
| 28 | 920 | 2.0 | 740 | 1.5 | ≥99 | 212 | 20.6 |
| 29 | 920 | 3.0 | 700 | 2.0 | ≥99 | 97 | 18.7 |
| 30 | 950 | 2.0 | 720 | 1.5 | ≥99 | 233 | 21.2 |
| 31 | 950 | 1.5 | 720 | 1.0 | ≥99 | 240 | 20.9 |
| 32 | 950 | 2.0 | 710 | 1.5 | ≥99 | 242 | 20.7 |
| 33 | 950 | 1.0 | 720 | 1.5 | ≥99 | 269 | 21.0 |
| 34 | 950 | 2.0 | 700 | 2.0 | ≥99 | 229 | 20.9 |
| 35 | 950 | 1.0 | 700 | 1.5 | ≥99 | 258 | 20.7 |
| 36 | 950 | 2.0 | 720 | 1.5 | ≥99 | 102 | 19.9 |

[Evaluation tests]

The thus-produced pseudo rotor of each test number was subjected to the following evaluation tests.

[Microstructure observation test]

A sample was taken from the center position of the sheet thickness of the pseudo rotor of each test number. The surface of the sample was mirror-polished, and thereafter the sample was immersed for around 10 seconds in a Nital solution to perform etching, thereby revealing the microstructure. An arbitrary one visual field (observation visual field) on the surface where the microstructure was revealed by etching was observed using an optical microscope with a magnification of 500 times. The visual field area of the observation visual field was 20,000 $\mu$m$^2$ (200 $\mu$m $\times$ 100 $\mu$m). Phases in the observation visual field were identified by contrast. As a result, the microstructure in the observation visual field was composed of martensite and bainite, and ferrite. The area of the identified ferrite was determined. The area fraction (%) of ferrite was determined by dividing the area of ferrite by the total area of the observation visual field. As mentioned above, in the microstructure in the observation visual field, the balance other than ferrite was martensite and/or bainite. Therefore, the total area fraction (%) of martensite and bainite was determined by the following equation.

$$\text{Total area fraction of martensite and bainite} = 100.0 - \text{area fraction of ferrite}$$

The total area fraction (%) of martensite and bainite determined for the pseudo rotor of each test number is shown in Table 2.

[Tensile test at 700°C]

The yield stress (MPa) at 700°C of the pseudo rotor of each test number was determined by a tensile test conforming to JIS G 0567 (2012). Specifically, a tensile test specimen was taken from the pseudo rotor of each test number. The length of the parallel portion of the tensile test specimen was 40 mm, and the diameter of the parallel portion was 6 mm. The tensile test specimen was heated to 700°C and held at that temperature for 10 minutes using a reheating furnace. After being held for 10 minutes at 700°C, the tensile test specimen was subjected to a tensile test in the atmosphere, and a stress-strain curve was obtained. The 0.2% proof stress determined based on the offset method from the obtained stress-strain curve was defined as the yield stress (MPa). For the pseudo rotor of each test number, the obtained yield stress (MPa) at 700°C is shown in Table 2.

[Electrical resistance measurement method]

The electrical resistance at normal temperature of the pseudo rotor of each test number was determined by a method conforming to JIS C 2526 (1994). Specifically, a test specimen was taken from the pseudo rotor of each test number. The size of the test specimen was 3 mm × 4 mm × 60 mm. The electrical resistance ($\mu\Omega$cm) of the test specimen was determined by the double bridge method at normal temperature. For the pseudo rotor of each test number, the obtained electrical resistance ($\mu\Omega$cm) is shown in Table 2.

[Test results]

Referring to Table 1 and Table 2, in the pseudo rotors of each of Test Numbers 1 to 15, the content of each element in the chemical composition was appropriate, Formula (1) was satisfied, and the total area fraction of martensite and bainite was 99% or more. As a result, the yield stress at 700°C was within the range of 120 to 250 MPa, and thus sufficiently high high-temperature strength as a rotor of an eddy current deceleration device was exhibited. Furthermore, the electrical resistance was 20.5 $\mu\Omega$cm or less, and thus sufficiently low electrical resistance as a rotor of an eddy current deceleration device was exhibited.
On the other hand, for the pseudo rotor of Test Number 16, the quenching temperature was too low, and the total area fraction of martensite and bainite was less than 99%. As a result, the yield stress at 700°C was less than 120 MPa, and thus sufficiently high high-temperature strength as a rotor of an eddy current deceleration device was not exhibited.
For the pseudo rotor of Test Number 17, the tempering temperature was too low. As a result, the yield stress at 700°C was more than 250 MPa, and the desired mechanical property as a rotor of an eddy current deceleration device was not exhibited.
In the pseudo rotors of Test Numbers 18 to 22, F1 was too high. As a result, the electrical resistance was more than 20.5 $\mu\Omega$cm, and thus sufficiently low electrical resistance as a rotor of an eddy current deceleration device was not exhibited.
In the pseudo rotor of Test Number 23, the content of C was too low. As a result, the yield stress at 700°C was less than 120 MPa, and thus sufficiently high high-temperature strength as a rotor of an eddy current deceleration device was not exhibited.
In the pseudo rotor of Test Number 24, the content of C was too high. As a result, the electrical resistance was more than 20.5 $\mu\Omega$cm, and thus sufficiently low electrical resistance as a rotor of an eddy current deceleration device was not exhibited.
In the pseudo rotor of Test Number 25, the content of Si was too high. As a result, the electrical resistance was more than 20.5 $\mu\Omega$cm, and thus sufficiently low electrical resistance as a rotor of an eddy current deceleration device was not exhibited.
In the pseudo rotor of Test Number 26, the content of Mn was too high. As a result, the electrical resistance was more than 20.5 $\mu\Omega$cm, and thus sufficiently low electrical resistance as a rotor of an eddy current deceleration device was not exhibited. Further, because the content of Mn was too high, the austenite phase was stable and the $A_{c1}$ transformation point decreased, and consequently low-temperature tempering had to be performed. As a result, the yield stress at 700°C was more than 250 MPa, and the desired mechanical property as a rotor of an eddy current deceleration device was not exhibited.
In the pseudo rotor of Test Number 27, the content of P was too high. As a result, the electrical resistance was more than 20.5 $\mu\Omega$cm, and thus sufficiently low electrical resistance as a rotor of an eddy current deceleration device was not exhibited.
In the pseudo rotor of Test Number 28, the content of S was too high. As a result, the electrical resistance was more than 20.5 $\mu\Omega$cm, and thus sufficiently low electrical resistance as a rotor of an eddy current deceleration device was not exhibited.
In the pseudo rotor of Test Number 29, the content of Cr was too low. As a result, the yield stress at 700°C was less than 120 MPa, and thus sufficiently high high-temperature strength as a rotor of an eddy current deceleration device was not exhibited.
In the pseudo rotor of Test Number 30, the content of Cr was too high. As a result, the electrical resistance was more than 20.5 $\mu\Omega$cm, and thus sufficiently low electrical resistance as a rotor of an eddy current deceleration device was not exhibited.
In the pseudo rotor of Test Number 31, the content of Mo was too high. As a result, the electrical resistance was more than 20.5 $\mu\Omega$cm, and thus sufficiently low electrical resistance as a rotor of an eddy current deceleration device was not exhibited.
In the pseudo rotor of Test Number 32, the content of V was too high. As a result, the electrical resistance was more than 20.5 $\mu\Omega$cm, and thus sufficiently low electrical resistance as a rotor of an eddy current deceleration device was not exhibited.

In the pseudo rotor of Test Number 33, the content of Nb was too high. As a result, the electrical resistance was more than 20.5 μΩcm, and thus sufficiently low electrical resistance as a rotor of an eddy current deceleration device was not exhibited.

In the pseudo rotor of Test Number 34, the content of sol. Al was too high. As a result, the electrical resistance was more than 20.5 μΩcm, and thus sufficiently low electrical resistance as a rotor of an eddy current deceleration device was not exhibited.

In the pseudo rotor of Test Number 35, the content of B was too high. As a result, the electrical resistance was more than 20.5 μΩcm, and thus sufficiently low electrical resistance as a rotor of an eddy current deceleration device was not exhibited.

In the pseudo rotor of Test Number 36, the content of N was too high. As a result, the yield stress at 700°C was less than 120 MPa, and thus sufficiently high high-temperature strength as a rotor of an eddy current deceleration device was not exhibited.

An embodiment of the present disclosure has been described above. However, the foregoing embodiment is merely an example for implementing the present disclosure. Accordingly, the present disclosure is not limited to the above embodiment, and can be practiced by appropriately modifying the above embodiment within a range that does not depart from the gist of the present disclosure.

REFERENCE SIGNS LIST

1    Eddy current deceleration device
10   Rotor
11   Cylindrical part
12   Arm part
13   Wheel part
20   Stator

**Claims**

1.  A rotor for an eddy current deceleration device, comprising:

    a cylindrical part,
    wherein the cylindrical part has:

    a chemical composition that consists of, by mass%,
    C: 0.05 to 0.15%,
    Si: 0.01 to 0.15%,
    Mn: 0.10 to 1.00%,
    P: 0.030% or less,
    S: 0.030% or less,
    Cr: 0.30 to 2.00%,
    Mo: 0.30 to 1.50%,
    V: 0.02 to 0.15%,
    Nb: 0.0 1 to 0.10%,
    sol. Al: 0.001 to 0.040%,
    B: 0.0005 to 0.0050%, and
    N: 0.001 to 0.010%,
    with the balance being Fe and impurities,
    and satisfies Formula (1);
    a microstructure in which a total area fraction of martensite and bainite is 99% or more; and
    a yield stress of 120 to 250 MPa at 700°C;

$$Cr + 4Si + 3sol.\ Al + Mo \leq 3.00 \quad (1)$$

    where, a content in percent by mass of a corresponding element is substituted for each symbol of an element in Formula (1).

2. A rotor for an eddy current deceleration device, comprising:

a cylindrical part,
wherein the cylindrical part has:

a chemical composition that contains, by mass%,
C: 0.05 to 0.15%,
Si: 0.01 to 0.15%,
Mn: 0.10 to 1.00%,
P: 0.030% or less,
S: 0.030% or less,
Cr: 0.30 to 2.00%,
Mo: 0.30 to 1.50%,
V: 0.02 to 0.15%,
Nb: 0.01 to 0.10%,
sol. Al: 0.001 to 0.040%,
B: 0.0005 to 0.0050%, and
N: 0.001 to 0.010%,
and further contains one or more elements selected from a group consisting of:

Cu: 0.20% or less,
Ni: 0.20% or less, and
Ti: 0.050% or less,
with the balance being Fe and impurities,
and satisfies Formula (1);
a microstructure in which a total area fraction of martensite and bainite is 99% or more; and
a yield stress of 120 to 250 MPa at 700°C;

$$Cr + 4Si + 3sol.\ Al + Mo \leq 3.00 \quad (1)$$

where, a content in percent by mass of a corresponding element is substituted for each symbol of an element in Formula (1).

3. A method for producing the rotor for an eddy current deceleration device according to claim 1, comprising:

a preparation process of preparing an intermediate product having a chemical composition that consists of, by mass%,
C: 0.05 to 0.15%,
Si: 0.01 to 0.15%,
Mn: 0.10 to 1.00%,
P: 0.030% or less,
S: 0.030% or less,
Cr: 0.30 to 2.00%,
Mo: 0.30 to 1.50%,
V: 0.02 to 0.15%,
Nb: 0.01 to 0.10%,
sol. Al: 0.001 to 0.040%,
B: 0.0005 to 0.0050%, and
N: 0.001 to 0.010%,
with the balance being Fe and impurities,
and satisfies Formula (1);
a quenching process of subjecting the intermediate product to quenching;
a tempering process of subjecting the intermediate product after the quenching process to tempering in which the intermediate product is held at a temperature of 700°C to less than an $A_{c1}$ point;
a working process of subjecting the intermediate product after the tempering process to working to form a cylindrical part; and
a rotor forming process of producing a rotor for an eddy current deceleration device using the cylindrical part;

$$Cr + 4Si + 3sol. Al + Mo \leq 3.00 \quad (1)$$

where, a content in percent by mass of a corresponding element is substituted for each symbol of an element in Formula (1).

4. A method for producing the rotor for an eddy current deceleration device according to claim 2, comprising:

a preparation process of preparing an intermediate product having a chemical composition that contains, by mass%,
C: 0.05 to 0.15%,
Si: 0.01 to 0.15%,
Mn: 0.10 to 1.00%,
P: 0.030% or less,
S: 0.030% or less,
Cr: 0.30 to 2.00%,
Mo: 0.30 to 1.50%,
V: 0.02 to 0.15%,
Nb: 0.01 to 0.10%,
sol. Al: 0.001 to 0.040%,
B: 0.0005 to 0.0050%, and
N: 0.001 to 0.010%,
and further contains one or more elements selected from a group consisting of:

Cu: 0.20% or less,
Ni: 0.20% or less, and
Ti: 0.050% or less,
with the balance being Fe and impurities,
and satisfies Formula (1);
a quenching process of subjecting the intermediate product to quenching;
a tempering process of subjecting the intermediate product after the quenching process to tempering in which the intermediate product is held at a temperature of 700°C to less than an $A_{c1}$ point;
a working process of subjecting the intermediate product after the tempering process to working to form a cylindrical part; and
a rotor forming process of producing a rotor for an eddy current deceleration device using the cylindrical part;

$$Cr + 4Si + 3sol. Al + Mo \leq 3.00 \quad (1)$$

where, a content in percent by mass of a corresponding element is substituted for each symbol of an element in Formula (1).

FIG.1

FIG.2

FIG.3

10
11
12
13
30

20

FIG.4

24
24
24
11
10
20
23
B
22
B
23
B
21

FIG.5

24
24
24
11
10
20
23
B
22
B
23
21

## INTERNATIONAL SEARCH REPORT

| International application No. |
| --- |
| **PCT/JP2022/044240** |

**A.    CLASSIFICATION OF SUBJECT MATTER**

*C22C 38/00*(2006.01)i; *C21D 9/00*(2006.01)i; *C22C 38/32*(2006.01)i; *C22C 38/54*(2006.01)i; *H02K 49/02*(2006.01)i; *C21D 8/02*(2006.01)n

FI:    C22C38/00 301Z; C21D9/00 A; C22C38/32; C22C38/54; H02K49/02 B; C21D8/02 A

According to International Patent Classification (IPC) or to both national classification and IPC

**B.    FIELDS SEARCHED**

Minimum documentation searched (classification system followed by classification symbols)

C22C38/00-38/60; C21D9/00; C21D8/00-8/02; H02K49/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2020/218276 A1 (NIPPON STEEL CORPORATION) 29 October 2020 (2020-10-29) paragraphs [0012]-[0013], examples | 1-4 |
| A | JP 2020-180324 A (NIPPON STEEL CORPORATION) 05 November 2020 (2020-11-05) paragraphs [0012]-[0013], examples | 1-4 |
| A | JP 9-172770 A (SUMITOMO METAL IND LTD) 30 June 1997 (1997-06-30) paragraphs [0027]-[0028], table 1 | 1-4 |
| A | JP 2022-514871 A (POSCO) 16 February 2022 (2022-02-16) tables 1-4 | 1-4 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **31 January 2023** | **14 February 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/044240**

| Patent document cited in search report | Publication date (day/month/year) | Patent family member(s) | Publication date (day/month/year) |
|---|---|---|---|
| WO 2020/218276 A1 | 29 October 2020 | EP 3960893 A1<br>paragraphs [0012]-[0013], examples<br>CN 113710827 A<br>KR 10-2021-0154238 A<br>US 2022/0216741 A1 | |
| JP 2020-180324 A | 05 November 2020 | (Family: none) | |
| JP 9-172770 A | 30 June 1997 | (Family: none) | |
| JP 2022-514871 A | 16 February 2022 | EP 3901316 A1<br>tables 1-4<br>CN 113227432 A<br>KR 10-2020-0076815 A<br>US 2022/0064769 A1<br>WO 2020/130619 A1 | |

Form PCT/ISA/210 (patent family annex) (January 2015)

EP 4 628 612 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8049041 A